Europäisches Patentamt

(19) European Patent Office

Office européen des brevets

(11) Publication number: **0 163 398**
**B1**

(12) **EUROPEAN PATENT SPECIFICATION**

(45) Date of publication of patent specification: **20.07.88**

(21) Application number: **85302606.0**

(22) Date of filing: **15.04.85**

(51) Int. Cl.⁴: **C 11 D 3/00,** C 11 D 3/16,
B 01 D 19/04

(54) Improved silicone foam control agent.

(30) Priority: **30.04.84 US 605032**

(43) Date of publication of application:
**04.12.85 Bulletin 85/49**

(45) Publication of the grant of the patent:
**20.07.88 Bulletin 88/29**

(84) Designated Contracting States:
**DE FR GB**

(56) References cited:
**DE-A-2 721 238**
**FR-A-2 214 745**
**US-A-4 486 336**

(73) Proprietor: **DOW CORNING CORPORATION**
**3901 S. Saginaw Road**
**Midland Michigan 48640 (US)**

(72) Inventor: **Willing, David Nelson**
**700 Adams**
**Midland Michigan (US)**

(74) Representative: **Laredo, Jack Joseph et al**
**Elkington and Fife**
**High Holborn House**
**52/54 High Holborn**
**London, WC1V 6SH (GB)**

Courier Press, Leamington Spa, England.

# 0 163 398

## Description

Detergent compositions have a well known tendency to produce suds when used with agitation in water. While a certain amount of suds is generally considered desirable, if only for psychological or esthetic reasons, excessive suds production can be inconvenient and costly.

It is a common practice, therefore to include a foam control agent in detergent formulations to control excessive suds.

It is known that some silicone antifoams can be used as foam control agents for detergents. For example, U.S. Patent No. 3,933,672, issued Jan. 20, 1976, discloses a detergent composition containing a silicone antifoam. This silicone antifoam is releasably incorporated in a water soluble carrier selected from certain substances.

A very effective silicone antifoam is described in U.S. Patent No. 3,445,839, issued July 15, 1969, which discloses a method for reducing or preventing foam in an aqueous system by adding thereto a composition consisting of a polydimethylsiloxane fluid having a viscosity of from 0.00002 $m^2$/s to 0.0015 $m^2$/s (20 centistokes to 1500 centistokes), a resin composed of $(CH_3)_3SiO_{1/2}$ units and $SiO_2$ units, and a silica aerogel.

U.S. Patent No. 3,984,200, issued October 5, 1976 to Van Doesburg, discloses a foam control agent for carpet dyeing. The foam control agent consists essentially of (1) a silicone-glycol copolymer, (2) a foam control agent consisting essentially of a triorganosilyl endblocked polydimethylsiloxane having a viscosity of at least 0.00002 $m^2$/s (20 centistokes) at 25°C, silica, and a silicone resin, and (3) an hydroxyl endblocked polydimethylsiloxane having a viscosity of 0.00005 $m^2$/s to 0.0002 $m^2$/s (50 to 200 centistokes) at 25°C.

EP—A—0127948, belonging to the state of the art by virtue of Article 54(3) EPC, discloses an improved silicone composition especially effective in suppressing foam in industrial and petroleum processes. Said composition consists essentially of from 75% to 99% of a high viscosity alpha, omega-bis(trimethylsiloxy)polydimethylsilozane, from 0.75% to 18.75% of a low viscosity alpha,omega-bis(trimethylsiloxy)polydimethylsiloxane, a certain silicone resin, and amorphous silica.

This invention relates to a silicone composition that is useful as a foam control agent for detergent composition and for controlling foam generally. In another aspect, this invention relates to improved detergent compositions which contain the silicone foam control agent, and to a method of controlling excessive suds.

It is an object of this invention to provide improved silicone foam control agents. It is a further object to provide detergent compositions having controlled sudsing behaviour.

The compositions of the present invention relate to a novel foam control agent comprising:

(A) from 1% to 75% of alpha,omega-bis(trimethylsiloxy)polydimethylsiloxane having a viscosity of from 0.01 $m^2$/s to 0.2 $m^2$/s (10,000 centistokes to 200,000 centistokes) at 25°C;

(B) from 15% to 17% of alpha,omega-bis(trimethylsiloxy)polydimethylsiloxane having a viscosity of from 0.0001 $m^2$/s to 0.005 $m^2$/s (100 centistokes to 5000 centistokes) at 25°C;

(C) from 2% to 20% of a silicone resin composed of $(CH_3)_3SiO_{1/2}$ units and $SiO_{4/2}$ units, the ratio of said $(CH_3)_3SiO_{1/2}$ units to $SiO_{4/2}$ units being from 0.4:1 to 1.2:1; and

(D) from 4% to 30% of amorphous silica having a surface area of from 50 $m^2$/g to 400 $m^2$/g, all of the above percentages being percentages by weight, based on the total weight of the foam control agent.

In another aspect, the present invention relates to detergent compositions containing a foam control agent as just defined.

In a further embodiment, the present invention relates to the use of the foam control agent as defined above in a method of controlling excessive sudsing in the use of a detergent. For every 100 parts of detergent, 0.05 to 5 parts by weight of the foam control agent are added.

Component (A) of the foam control agent of the present invention is a high viscosity alpha,omega-bis(trimethylsiloxy)polydimethylsiloxane fluid having a viscosity of from 0.01 $m^2$/s to 0.2 $m^2$/s (10,000 centistokes to 200,000 centistokes) at 25°C; more preferably, said fluid has a viscosity of from about 0.04 $m^2$/s to 0.15 $m^2$/s (40,000 centistokes to 150,000 centistokes) at 25°C. Component (A) is present in the foam control agent in a proportion of from 1% to 75% by weight, based on the total weight of the foam control agent. More preferably, component (A) is present in a range of from 2% to 50% by weight, based on the total weight of the foam control agent. Most preferably, component (A) is present in a range of from 5% to 40% by weight, based on the total weight of the foam control agent.

Two or more fluids can be blended to form component (A), so long as the fluids all have viscosities of from 0.01 $m^2$/s to 0.2 $m^2$/s (10,000 centistokes to 200,000 centistokes) at 25°C.

Component (B) of the foam control agent of the present invention is a low viscosity alpha,omega-bis(trimethylsiloxy)polydimethylsiloxane fluid having a viscosity of from 0.0001 $m^2$/s to 0.005 $m^2$/s (100 centistokes to 5000 centistokes) at 25°C. Preferably, said fluid has a viscosity of from 0.0005 $m^2$/s to 0.002 $m^2$/s (500 centistokes to 2000 centistokes) at 25°C. Component (B) is present from 15% to 87% by weight, based on the total weight of the composition. More preferably, component (B) is present from 20% to 85% by weight, based on the total weight of the composition. Most preferably, component (B) is present from 30% to 70% by weight, based on the total weight of the composition.

Two or more fluids can be blended to form component (B), so long as the fluids all have viscosities of from 0.0001 $m^2$/s to 0.005 $m^2$/s (100 centistokes to 5000 centistokes) at 25°C.

The viscosity of an alpha,omega-bis(trimethylsiloxy)polydimethylsiloxane fluid used as Component

2

(A) or Component (B) of the compositions of the present invention can be measured by a variety of well-known methods. Viscosities as referred to herein are as measured by capillary viscometry.

The alpha,omega-bis(trimethylsiloxy)polydimethylsiloxane fluids used in preparing the compositions of the present invention are quite well known and widely available. Methods of synthesis of said fluids are also well known and need not be elaborated upon herein.

Component (C) of the foam control agent of the present invention is a siloxane resin composed of $(CH_3)_3SiO_{1/2}$ units and $SiO_{4/2}$ units. Such resins are well-known and commercially available. The synthesis of such resins is well documented in the organosilicon chemistry literature, and need not be detailed herein.

The ratio of $(CH_3)_3SiO_{1/2}$ units to $SiO_{4/2}$ units in the siloxane resin, Component (C), is from 0.4:1 to 1.2:1. Preferably, the ratio of $(CH_3)_3SiO_{1/2}$ units to $SiO_{4/2}$ units is from 0.6:1 to 1:1.

Component (C) is present from 2% to 20% by weight, based on the total weight of the composition. More preferably, component (C) is present from 4% to 15% by weight, based on the total weight of the composition. Most preferably, Component (C) is present from 5% to 10% by weight based on the total weight of the composition.

Component (D) of the foam control agent is an amorphous silica having a surface area of from 50 $m^2/g$ to 400 $m^2/g$. More preferably, component (D) has a surface area of from 100 $m^2/g$ to 300 $m^2/g$.

Amorphous silica is commercially available from numerous sources. Surface area is normally measured and reported by the manufacturer of said silica. Such methods as titration methods, or the B.E.T. differential adsorption method are used to measure the surface area of amorphous silica.

Amorphous silica is available in three main types, classified according to the method of manufacture. These three types are silica gel, fume silica, and precipitated silica.

Silica gel is manufactured by acidifying an aqueous solution of sodium silicate, which causes the formation of an $SiO_2$ gel. This $SiO_2$ gel is mechanically broken up, washed free of salt and acid, and then dried.

Fume silica is obtained by condensing vapors of $SiO_2$. $SiO_2$ vapors can be produced by heating crystalline $SiO_2$, such as high purity quartz, passing crystalline $SiO_2$ into a high temperature plasma arc, or, most commonly, the $SiO_2$ vapors can be produced by reacting $SiCl_4$ and $H_2$ with $O_2$.

Precipitated silica can be produced by chemically destabilizing an aqueous solution of sodium silicate. A fine precipitate is formed upon chemical destabilization, and said precipitate is subsequently washed and dried.

While it is believed that any amorphous silica having the required surface area can be used in the compositions of the present invention, the use of precipitated silica is preferred.

Amorphous silica, component (D) in the compositions of the present invention, is present from 4% to 30% preferably 7% to 16% by weight, based on the total weight of the composition. Most preferably, component (D) is present in a range of from 9% to 13% by weight, based on the total weight of the foam control agent.

The amorphous silica used as Component (D) in the compositions of the present invention can be chemically modified or treated, such as treated with organoalkoxysilanes or organohalosilanes in any well-known manner, if desired.

At the present time, it is believed that the following formulation represents the optimum foam control agent for incorporating in a detergent composition:

Component (A): about 30%;

Component (B): about 52.5%;

Component C: about 7%; and

Component (D): about 10.5%.

Compositions of the present invention can be prepared by two types of general procedures, one of which is preferred. In the first, preferred, general procedure, Components (B), (C), and (D) are thoroughly mixed, and heated to provide a concentrate. The appropriate amount of component (A) or component (A) and additional component (B), is then added to said concentrate with simple mixing, thus producing the compositions of the present invention. In a second type of general procedure, components (A), (B), (C), and (D) are all thoroughly mixed, and heated, thus providing compositions of the present invention.

Thorough mixing, as referred to herein, can be accomplished by high shear mechanical mixers, such as high intensity mixers, colloid mills, and the like.

Heating can be accomplished by heating either the mixture of components (A), (B), (C), and (D), or mixing components (B), (C), and (D) together at a temperature of from about 100°C to about 250°C, and maintaining said temperature for a period of time from about 5 minutes to about 6 hours.

Exemplary of methods that can be used to prepare the compositions of the present invention are the following:

In a first, and preferred exemplary method, components (B), (C), and (D) are first mixed together in a colloid mill, then heated to a temperature of 200°C, and said temperature is maintained for about 2 hours. The resulting concentrate of components (B), (C), and (D) is cooled to room temperature, and the appropriate amount of component (A), or component (A) plus additional component (B), is added to said concentrate. This four component mixture is stirred with a paddle stirrer for 5 minutes.

In a second exemplary method, components (A), (B), (C) and (D) are first thoroughly mixed in a high intensity mixer, then transferred to a vessel, where said components are heated to a temperature of 150°C, and said temperature is maintained for 1 hour, resulting in a foam control composition of the present invention.

It is beneficial to include a small amount of a basic material in the mixture of components (B), (C), and (D), or in the mixture of components (A), (B), (C), and (D). Thus, for example, adding 1 part of 10% aqueous sodium hydroxide per each 100 parts of silicone has been found to be beneficial, the above parts being parts by weight.

The above exemplary methods are set forth for purposes of illustration. Those skilled in the art will recognize a variety of other methods suitable to thoroughly mix and heat the components to form a composition of the present invention.

The detergent compositions of the present invention are obtained by combining the foam control agent of the present invention with conventional components of a detergent composition.

The detergent composition typically comprises one or more surfactants, and various other components.

The surfactant is chosen from nonionic, cationic, anionic, amphoteric, and zwitterionic surfactants. Suitable surfactants for use as the detergent include synthetic detergents as well as the well known natural "soaps", i.e. salts of fatty acids.

Among other components that are useful in the detergent compositions of this invention are builders, softeners, bacteriostats, bactericides, pH adjusters, dyes, fluorescers, corrosion inhibitors, bleaching agents, thickeners, fillers, anticaking agents, perfumes, enzymes, and other optional additives well known to those of skill in the art.

Of course, any components known to adversely affect the suds control agent, or discovered to adversely effect the suds control agent, are to be avoided.

While the foam control agent can be incorporated directly into many detergents, it will generally be preferred to incorporate the foam control agent into the detergent in a manner such that it is isolated to some degree from alkaline detergent constituents. Such isolation can be achieved by, e.g., adsorbing the suds control agent onto a neutral filler, or encapsulating the suds control agent in a neutral, water-soluble component, such as gelatin, starch or the like. Isolation of a suds control agent in such a manner is an expedient well known to those of skill in the art.

From 0.05 parts to 5 parts by weight of the suds control agent of this invention are combined with the detergent constituents; more preferably from 0.1 parts to 2.5 parts are added; most preferably from 0.2 parts to 2 parts are added, all the above parts being by weight, based on the total weight of the detergent composition.

The detergent compositions of the present invention are useful laundry detergents, dishwashing detergents, especially dishwashing machine detergents, cosmetic detergents, such as hand soaps or shampoos, and other types of detergents.

The following examples are presented to further teach how to make and use the composition and how to practice the method of the present invention. All parts and percentages are by weight unless otherwise indicated. Viscosity values reported in the Examples were measured by capillary viscometry at 25°C.

The performance of suds control agents was measured by the Hot Pump Test.

The Hot Pump Test was conducted with a special apparatus, wherein a foaming solution was pumped rapidly from an outlet at the bottom of a 2 liter stainless steel beaker to the top of the beaker through small bore stainless steel tubing. The liquid was expelled from the tubing into the beaker with considerable velocity, thus producing a high degree of agitation. In addition, a 7.62 cm (3 inch) propeller was rotated at 150 rpm in at a distance of 1.27 cm ($\frac{1}{2}$ inch) below the surface of the liquid.

For each test, the beaker was partially filled with 1 liter of tap water, to which was added 2 grams of Tide® detergent, a product of Proctor and Gamble, Cincinnati, Ohio. The Tide® solution which resulted was heated to a temperature of 38±4°C. Each foam control agent sample being tested and introduced as a 1% dispersion in propylene glycol, and the Tide solution and sample being tested were circulated, by a pump, through the apparatus, at a rate of 3.35 liters/minute. The concentration of each sample as a fraction of the total volume of the Tide® solution was recorded. As the test proceeded, the time required for the height of foam to reach various heights was recorded. This data was used to determine, by graphical extrapolation, the time required for the foam height to reach 7.62 cm (3 inches). The number thus obtained was recorded for each sample. Fresh Tide® solution was prepared for each sample tested.

Examples 1—14

A concentrate of components (B), (C), and (D) was made by mixing together in a vessel equipped with means for agitation:

(B) 75% of alpha,omega-bis(trimethylsiloxy)polydimethylsiloxane having a viscosity of 0.001 m²/s (1000 centistokes);

(C) 10% of a silicone resin composed of $(CH_3)_3SiO_{1/2}$ units and $SiO_{4/2}$ units in a ratio between 0.6:1 and 1:1; and

(D) 15% of precipitated silica having a surface area of approximately 300 m²/g.

The mixture of (B), (C), and (D) was heated to a temperature of about 200°C and the pressure in the vessel was reduced to 53.33 kPa (400 mm Hg). After 4 hours of being agitated under the above conditions of

4

temperature and pressure, the resulting concentrate of components (B), (C), and (D) was removed from the vessel and allowed to cool to room temperature.

Examples 1—14 were generated by adding various amounts of alpha,omega-bis(trimethylsiloxy)polydimethylsiloxane having a viscosity of about 0.1 $m^2/s$ (100,000 centistokes), and additional component (B) to the above concentrate. The compositions of Examples 1—14 are found in Table 1, along with the performance results of each sample in the Hot Pump Test.

TABLE 1
Suds control performance

| Example | Component (A) % 0.1 m²/s (% 100,000 centistokes) fluid | Component (B) % 0.001 m²/s (% 1,000 centistokes) fluid | Component (C) % resin | Component (D) % SiO₂ | Pump test results (min) ppm of suds control agent[1] | | | |
|---|---|---|---|---|---|---|---|---|
| | | | | | 10 | 20 | 30 | 40 |
| 1 | 2 | 78 | 8 | 12 | | | 18.2 | |
| 2 | 5 | 82.5 | 5 | 7.5 | | | | 14.2 |
| 3 | 5 | 82.5 | 5 | 7.5 | | 7.5 | | |
| 4 | 10 | 70 | 8 | 12 | | 16.1 | | |
| 5 | 10 | 70 | 8 | 12 | | | | 20.5 |
| 6 | 18 | 62 | 8 | 12 | | | 18.6 | |
| 7 | 18 | 64.5 | 7 | 10.5 | 7.4 | 13.3 | 15.9 | 16.5 |
| 8 | 25 | 62.5 | 5 | 7.5 | | | 17.7 | |
| 9 | 25 | 62.5 | 5 | 7.5 | | | 18.5 | |
| 10 | 25 | 62.5 | 5 | 7.5 | | | 17.9 | |
| 11 | 30 | 52.5 | 7 | 10.5 | 10 | 16.3 | 15.7 | 19.0 |
| 12 | 40 | 55 | 2 | 3 | | | | 14.0 |
| 13 | 45 | 42.5 | 5 | 7.5 | | | | 27.8 |
| 14 | 45 | 42.5 | 5 | 7.5 | | 14.7 | | |

[1] Parts per million of foam control agent applied to 1 liter of 0.2% Tide® solution. Thus, 10 ppm is the equivalent of 0.5 parts per 100 parts of Tide® detergent, 20 ppm is the equivalent of 1 part, 30 ppm is the equivalent of 1.5 parts, and 40 ppm is the equivalent of 2 parts.

Examples 15—24

In Examples 15—24, compositions were prepared by mixing together components (A), (B), (C), and (D), along with 1 part of 10% aqueous NaOH solution per 100 parts of silica. The resulting mixtures of four components and NaOH solution were passed through a colloid mill with a gap setting of 0.10 cm (0.040 inches). The milled mixtures were heated in a vessel equipped with a stirrer to a temperature of 211±10°C, with a nitrogen purge and continuous stirring, for 2½ hours. After 2½ hours, the mixtures were removed from the vessel and allowed to come to room temperature. Each Example was tested by the Hot Pump Test. The compositions of Examples 15—24, along with the results obtained for each in the Hot Pump Test are found in Table 2.

Comparisons 1, 2, and 3, exemplary of prior art foam control agents, were also tested by the Hot Pump Test, and the results displayed in Table 2.

TABLE 2
Suds control performance

| Example | Component (A) % 0.0773 $m^2$/s (77,300 centistokes) fluid | Component (B) % 0.001 $m^2$/s (1,000 centistokes) fluid | Component (C) % resin | Component (D) % $SiO_2$ | Pump test results (min) ppm of foam control agent | |
|---|---|---|---|---|---|---|
| | | | | | 10 | 20 |
| 15 | 14 | 57 | 15 | 14 | 8.8 | 11.4 |
| 16 | 15 | 60 | 10 | 15 | 9.6 | 13.2 |
| 17 | 15 | 60 | 10 | 15 | 7.3 | 12.2 |
| 18 | 15 | 60 | 10 | 15 | 9.9 | 12.6 |
| 19 | 16 | 64 | 4 | 16 | 7.3 | 13.0 |
| 20 | 16 | 64 | 4 | 16 | 5.0 | 13.2 |
| 21 | 28.5 | 42.5 | 15 | 14 | 12.2 | 15.6 |
| 22 | 30 | 45 | 10 | 15 | 10.6 | 13.6 |
| 23 | 30 | 45 | 10 | 15 | 8.7 | 15.4 |
| 24 | 32 | 48 | 4 | 16 | 10.8 | 16.3 |
| Comparison 1 | 0 | 75 | 10 | 15 | 6.6 | 9.4 |
| Comparison 2 | 0 | 95.4[1] | 0 | 4.6 | 2.9 | 4.9 |
| Comparison 3 | 0 | 87.5 | 2.5 | 10 | — | 3.5 |

[1] The viscosity of the fluid was 0.00055 $m^2$/s (550 centistokes) for Comparison 2.

0 163 398

Example 25

A composition of the present invention was made having the following composition:

A) 70.0% of alpha,omega-bis(trimethylsiloxy)polydimethylsiloxane having a viscosity of 0.0125 $m^2/s$ (12,500 centistokes) at 25°C, and 4.5% of alpha,omega-bis(trimethylsiloxy)polydimethylsiloxane having a viscosity of 0.096 $m^2/s$ (96,000 centistokes) at 25°C;

B) 18% of alpha,omega-bis(trimethylsiloxy)polydimethylsiloxane having a viscosity of 0.001 $m^2/s$ (1000 centistokes) at 25°C,

C) 3.0% of the silicone resin of Example 1; and

D) 4.5% of the precipitated silica of Example 1.

The foam controlling effectiveness of this composition was evaluated by the following test.

Ten and 50 parts per million respectively of the composition of this Example were added to solutions consisting of 1% Triton® X-100 (isoctyl phenyl polyethoxy ethanol), a product of the Rohm and Haas Co. of Philadelphia PA, and 99% water.

The resultant mixture was shaken for various lengths of time on a mechanical shaker and the time required for the foam to collapse, then break were recorded. The results of this testing are found in Table 3. Test results for comparison 2 are also included. Note that Example 25 is a superior defoamer to Comparison 2 of Table 2, especially at longer shake times.

TABLE 3
Collapse time and break time

| Shake time | Collapse/Break time in seconds | | | | | |
|---|---|---|---|---|---|---|
| | 10 s | 40 s | 1 min | 2 min | 5 min | 10 min |
| Example 25 | | | | | | |
| at 10 ppm | 19/25 | 25/27 | 26/35 | 21/30 | — | — |
| at 50 ppm | 4/5 | 4/6 | 3/5 | 6/8 | 12/17 | 24/30 |
| Comparison 2 | | | | | | |
| at 50 ppm | 3/5 | 8/12 | 9/18 | 9/20 | 14/29 | 25/44 |

## Claims

1. A foam control agent, said agent comprising

(A) from 1% to 75% of alpha,omega-bis(trimethylsiloxy)polydimethylsiloxane having a viscosity of from 0.01 $m^2/s$ to 0.2 $m^2/s$ (10,000 centistokes to 200,000 centistokes) at 25°C;

(B) from 15% to 87% of alpha,omega-bis(trimethylsiloxy)polydimethylsiloxane having a viscosity of from 0.0001 $m^2/s$ to 0.005 $m^2/s$ (100 centistokes to 5000 centistokes) at 25°C;

(C) from 2% to 20% of a silicone resin composed of $(CH_3)_3SiO_{1/2}$ units and $SiO_{4/2}$ units, the ratio of said $(CH_3)_3SiO_{1/2}$ units to $SiO_{4/2}$ units being from 0.4:1 to 1.2:1; and

(D) from 4% to 30% of amorphous silica having a surface area of from 50 $m^2/g$ to 400 $m^2/g$;

all of the above percentages being percentages by weight, based on the total weight of the foam control agent.

2. A foam control agent as claimed in Claim 1, wherein the amorphous silica is precipitated silica having a surface area of from 100 $m^2/g$ to 300 $m^2/g$.

3. A foam control agent as claimed in Claim 1 or 2, wherein

component (A) is present in a range of from 2% to 50%;

component (B) is present in a range of from 20% to 85%;

component (C) is present in a range of from 4% to 15%; and

component (D) is present in a range of from 7% to 16%;

all of the above percentages being percentages by weight based on the total weight of the foam control agent.

4. A foam control agent as claimed in Claim 3, wherein

component (A) is present in a range of from 5% to 40%;

component (B) is present in a range of from 30% to 70%;

component (C) is present in a range of from 5% to 10%; and

component (D) is present in a range of from 9% to 13%;

all of the above percentages being percentages by weight based on the total weight of the foam control agent.

5. A detergent composition comprising a detergent and, for each 100 parts by weight of the said detergent, from 0.05 to 5 parts by weight of a foam control agent as defined in any of Claims 1 to 4.

9

6. A method of controlling excessive sudsing in the use of detergent, said method comprising adding for each 100 parts by weight of said detergent from 0.05 to 5 parts by weight of a foam control agent as defined in any of Claims 1 to 4.

**Patentansprüche**

1. Schaumsteuerungsmittel, wobei das Mittel enthält

(A) von 1% bis 75% eines alpha,omega-Bis(trimethylsiloxyn)polydimethylsiloxan mit einer Viskosität bei 25°C von 0,01 $m^2$/sek bis 0,2 $m^2$/sek (10,000 Centistoke bis 200,000 Centistoke),

(B) von 15 bis 87% alpha,omega-Bis(trimethylsiloxyn)polydimethylsiloxan mit einer Viskosität bei 25°C von 0,0001 $m^2$/sek bis 0,005 $m^2$/sek (100 Centistoke bis 5,000 Centistoke),

(C) von 2 bis 20% eines aus $(CH_3)_3SiO_{1/2}$ Einheiten und $SiO_{4/2}$ aufgebauten Siliconharzes, bei dem das Verhältnis von $(CH_3)_3SiO_{1/2}$ Einheiten zu $SiO_{4/2}$ Einheiten von 0,4:1 bis 1,2:1 beträgt, und

(D) von 4 bis 30% amorphes Siliziumdioxyd mit einer Oberfläche von 50 $m^2$/g bei 400 $m^2$/g, wobei alle zuvor angegebenen Prozente Gewichtsprozente bezogen auf das Gesamtgewicht des Schaumsteuerungsmittels sind.

2. Schaumsteuerungsmittel nach Anspruch 1, dadurch gekennzeichnet, daß das amorphe Siliziumdioxyd ein gefälltes Siliziumdioxyd mit einer Oberfläche von 100 $m^2$/g bis 300 $m^2$/g ist.

3. Schaumsteuerungsmittel nach Ansprüchen 1 oder 2, dadurch gekennzeichnet, daß

der Bestandteil (A) in einem Bereich von 2% bis 50% anwesend ist,

der Bestandteil (B) in einem Bereich von 20% bis 85% anwesend ist,

der Bestandteil (C) in einem Bereich von 4% bis 15% anwesend ist, und

der Bestandteil (D) in einem Bereich von 7% bis 16% anwesend ist,

wobei alle Prozentangaben Gewichtsprozente bezogen auf Gesamtgewicht des Schaumsteuerungsmittels sind.

4. Schaumsteuerungsmittel nach Anspruch 3, dadurch gekennzeichnet, daß

der Bestandteil (A) in einem Bereich von 5% bis 40% anwesend ist,

der Bestandteil (B) in einem Bereich von 30% bis 70% anwesend ist,

der Bestandteil (C) in einem Bereich von 5% bis 10% anwesend ist, und

der Bestandteil (D) in einem Bereich von 9% bis 13% anwesend ist,

wobei alle Prozentangaben Gewichtsprozente bezogen auf Gesamtgewicht des Schaumsteuerungsmittels sind.

5. Waschmittelzusammensetzung enthaltend ein Waschmittel und für jeweils 100 Gewichtsteile des Waschmittels von 0,05 bis 5 Gewichtsteile eines Schaumsteuerungsmittels gemäß jedem der Ansprüche 1 bis 4.

6. Verfahren zum Steuern des übermäßigen Schäumens bei der Verwendung von Waschmittel durch Zugeben auf jeweils 100 Gewichtsteile des Waschmittels von 0,05 bis 5 Gewichtsteilen eines Schaumsteuerungsmittels gemäß jedem der Ansprüche 1 bis 4.

**Revendications**

1. Un agent de lutte contre le moussage, qui comprend

(A) de 1% à 75% d'alpha, oméga-bis(triméthylsiloxy)polydiméthylsiloxane ayant une viscosité de 0,01 $m^2$/s à 0,2 $m^2$/s (10000 centistokes à 200000 centistokes) à 25°C;

(B) de 15% à 87% d'alpha, oméga-bis(triméthylsiloxy)polydiméthylsiloxane ayant une viscosité de 0,0001 $m^2$/s à 0,005 $m^2$/s (100 centistokes à 5000 centistokes) à 25°C;

(C) de 2% à 20% d'une résine de silicone composée de mailles $(CH_3)_3SiO_{1/2}$ et de mailles $SiO_{4/2}$, le rapport des mailles $(CH_3)_3SiO_{1/2}$ aux mailles $SiO_{4/2}$ allant de 0,4:1 à 1,2:1; et

(D) de 4% à 30% de silice amorphe ayant une surface spécifique de 50 $m^2$/g à 400 $m^2$/g;

tous les pourcentages ci-dessus étant des pourcentages en poids, basés sur le poids total de l'agent de lutte contre le moussage.

2. Un agent de lutte contre le moussage selon la revendication 1, dans lequel la silice amorphe est de la silice précipitée ayant une surface spécifique de 100 $m^2$/g à 300 $m^2$/g.

3. Un agent de lutte contre le moussage selon la revendication 1 ou 2, dans lequel

le constituant (A) est présent à raison de 2% à 50%;

le constituant (B) est présent à raison de 20% à 85%;

le constituant (C) est présent à raison de 4% à 15%; et

le constituant (D) est présent à raison de 7% à 16%;

tous les pourcentages ci-dessus étant des pourcentages en poids, basés sur le poids total de l'agent de lutte contre le moussage.

4. Un agent de lutte contre le moussage selon la revendication 3, dans lequel

le constituant (A) est présent à raison de 5% à 40%;

le constituant (B) est présent à raison de 30% à 70%;

le constituant (C) est présent à raison de 5% à 10%; et

le constituant (D) est présent à raison de 9% à 13%;

tous les pourcentages ci-dessus étant des pourcentages en poids, basés sur le poids total de l'agent de lutte contre le moussage.

5. Une composition détergente comprenant un détergent et, par 100 parties en poids dudit détergent, de 0,05 à 5 parties en poids d'un agent de lutte contre le moussage tel que défini dans l'une quelconque des revendications 1 à 4.

6. Un procédé de lutte contre un moussage excessif lors de l'utilisation d'un détergent, ce procédé consistant à ajouter, par 100 parties en poids dudit détergent, de 0,05 à 5 parties en poids d'un agent de lutte contre le moussage tel que défini à l'une quelconque des revendications 1 à 4.

11